# EUROPEAN PATENT APPLICATION

(11) **EP 3 229 144 A1**
(43) Date of publication of application: **11.10.2017**
(21) Application number: 14907482.5
(22) Date of filing: 04.12.2014
(51) Int. Cl.: G06F 13/00

(54) **DISTRIBUTION METHOD, DEVICE, AND PROGRAM**

(71) Applicant: Fujitsu Limited, Kawasaki-shi, Kanagawa 211-8588 (JP)
(72) Inventor: ITAKURA, Kota, Kawasaki-shi Kanagawa 211-8588 (JP); FUJII, Akira, Kawasaki-shi Kanagawa 211-8588 (JP)
(74) Representative: Haseltine Lake LLP
(86) International application number: PCT/JP2014/082174
(87) International publication number: WO 2016/088237

(57) **Abstract**

Waiting time is reduced in a client terminal when an application is divided and delivered. Plural file groups, which are an application divided into a specific division count, are delivered to a terminal. When doing so, the file group to be delivered next is selected based on a usage state of a file group at the terminal and a file group transition state that was predetermined based on a usage sequence of the respective file groups when executing the application. Then, the selected file group is delivered to the terminal.

## Description

### Technical Field

Technology disclosed herein relates to a delivery method, a delivery device, and a delivery program.

### Background Art

Web applications serving as applications that run on multiple platforms have become mainstream. A solution known as a packaged web application, in which plural files needed when the application runs are collected into a single package, is employed to run web applications offline.

First, a package needs to be downloaded at the client-side terminal executing the packaged web application. Accordingly, if download requests are made from plural client terminals simultaneously, this places strain on communication bandwidth and downloading the package to each client terminal takes time. In some cases, users are then unable to execute the application soon after the user desires to use the application.

To reduce the strain on communication bandwidth when plural client terminals are downloading a package simultaneously, the package can conceivably be divided into plural file groups and sequentially delivered to suppress the amount of data being delivered at once. In such cases, sometimes a client terminal will need a file group that has not yet been delivered, and sometimes unproductive waiting time elapses before the needed file group is delivered.

Therefore, a proposal has been made for a data processing system for generating file reference information that records references made by the program to each item of data in the files. In the system, based on the file reference information, data in the files that starts to be referenced at respective stages in program execution is collected to create data groups and data group information related to referencing each data group of the files. Then, at the client side, files are generated based on the received data group information and the data groups, and the files are referenced at each stage of program execution.

### Related Patent Documents

Patent Document 1: Japanese Laid-Open Patent Publication No. 2004-240802

### SUMMARY OF INVENTION

### Technical Problem

In conventional technology, waiting time in the client terminal can be reduced in some cases by referencing data group information, and preemptively reading a file that will be needed by the client terminal and delivering the read file to the client terminal.

However, since the sequence in which files are needed will differ for each client terminal executing the application, it is inappropriate in some cases to determine the delivery sequence of the file groups by referencing predetermined data group information as in the conventional technology. In particular, at the initial stage of application execution in the client terminal, in cases in which files are needed in a different sequence from the sequence indicated by the data group information, preemptive reading and delivery of the file groups is misguided and file requests from the client terminal will be frequent. In such cases, there is an issue of a longer waiting time elapsing before the needed files are delivered to the client terminal.

An object of one aspect of technology disclosed herein is to reduce the waiting time in the client terminal when an application is divided and delivered.

### Solution to Problem

In one aspect of technology disclosed herein, plural file groups that are an application divided into a specific division count are delivered to a terminal. When doing so, the file group to be delivered next is selected based on: file group transition states, which are predetermined based on the usage sequence of each of the plural file groups when the application is executed; and usage states of the file groups at the terminal. Then, the determined file group is delivered to the terminal.

### Advantageous Effects of Invention

### Advantageous Effects of Invention

One aspect of technology disclosed herein has an advantageous effect of enabling waiting time of a client terminal to be reduced when an application is divided and delivered.

### BRIEF DESCRIPTION OF DRAWINGS

Fig. 1 is a block diagram illustrating a schematic of a delivery system.
Fig. 2 is a functional block diagram of a delivery device and client terminals.
Fig. 3 is a conceptual diagram illustrating dividing of an application.
Fig. 4 is a diagram illustrating an example of a file group table.
Fig. 5 is a diagram illustrating an example of a transition graph.
Fig. 6 is a diagram illustrating an example of a file group transition table.
Fig. 7 is a diagram illustrating an example of a division count table.
Fig. 8 is a diagram illustrating an example of a management information table.
Fig. 9 is a diagram illustrating an example of an access log table.
Fig. 10 is a diagram illustrating an example of a transition graph.
Fig. 11 is a block diagram illustrating a schematic configuration of a computer that functions as a delivery device.
Fig. 12 is a block diagram illustrating a schematic configuration of a computer that functions as a client terminal.
Fig. 13 is a flowchart illustrating an example of registration processing.
Fig. 14 is a flowchart illustrating an example of determination processing.
Fig. 15 is a flowchart illustrating an example of delivery processing.
Fig. 16 is a flowchart illustrating an example of schedule determination processing. Fig. 17 is a flowchart illustrating an example of determination processing.
Fig. 18 is a flowchart illustrating an example of update processing.
Fig. 19 is a flowchart illustrating an example of client side processing.
Fig. 20 is a diagram illustrating another example of a management information table.

### DESCRIPTION OF EMBODIMENTS

Detailed explanation follows regarding an example of an exemplary embodiment according to technology disclosed herein, with reference to the drawings. In the present exemplary embodiment, explanation follows regarding a delivery device that divides a packaged web application into plural file groups and delivers the plural file groups. Hereafter, a packaged web application collected into a single package is also simply referred to as an "application".

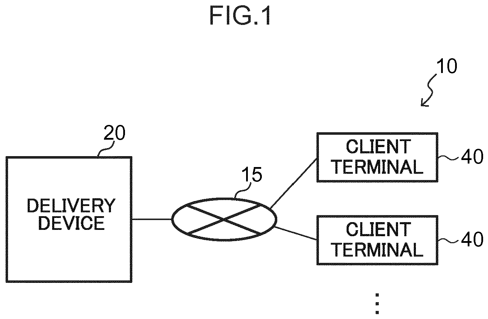

As illustrated in Fig. 1, a delivery system 10 according to the present exemplary embodiment includes a delivery device 20 and plural client terminals 40. The delivery device 20 and each of the plural client terminals 40 are connected to one another by a network 15.

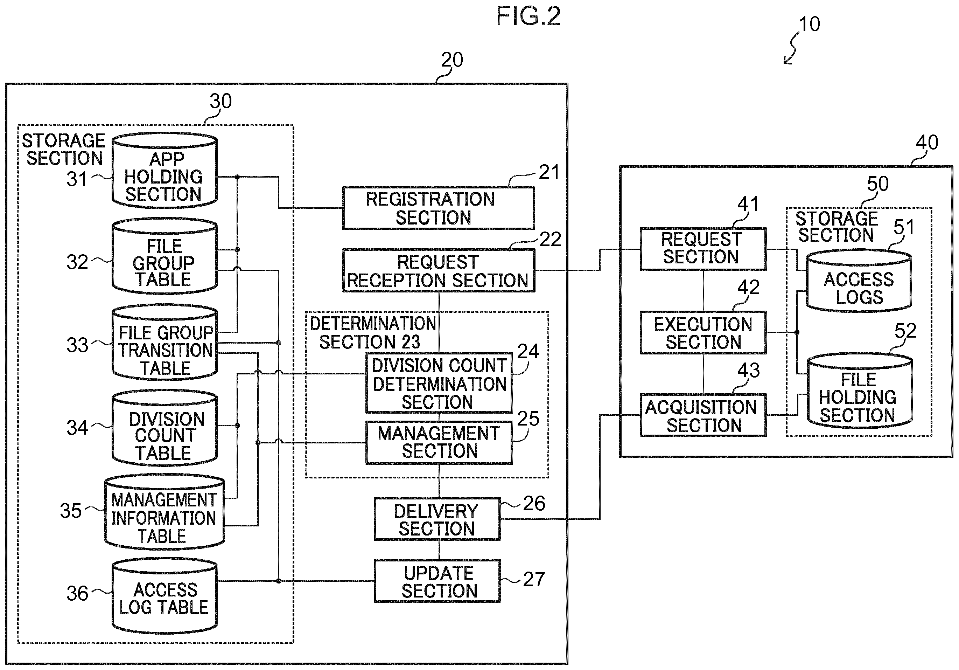

Fig. 2 illustrates a functional block diagram of the delivery device 20 and each client terminal 40. As illustrated in Fig. 2, the delivery device 20 includes a registration section 21, a request reception section 22, a determination section 23 that includes a division count determination section 24 and a management section 25, a delivery section 26, and an update section 27. The delivery device 20 also includes a storage section 30. The storage section 30 includes an app holding section 31, and stores a file group table 32, a file group transition table 33, a division count table 34, a management information table 35, and an access log table 36.

For example, a personal computer, a tablet terminal, a smartphone, or the like may be employed as the client terminal 40. As illustrated in Fig. 2, the client terminal 40 includes a request section 41, an execution section 42, and an acquisition section 43. The client terminal 40 also includes a storage section 50. The storage section 50 includes a file holding section 52, and stores access logs 51.

First, explanation follows regarding each functional section of the delivery device 20, and accompanying explanation regarding tables and the like employed by each functional section.

The registration section 21 receives newly registered applications. The application received here is a packaged web application, and plural files needed for execution of the application are collected into a single package. Further, identification information (an app ID) for the application is also included in the package. The registration section 21 stores the received application in the app holding section 31.

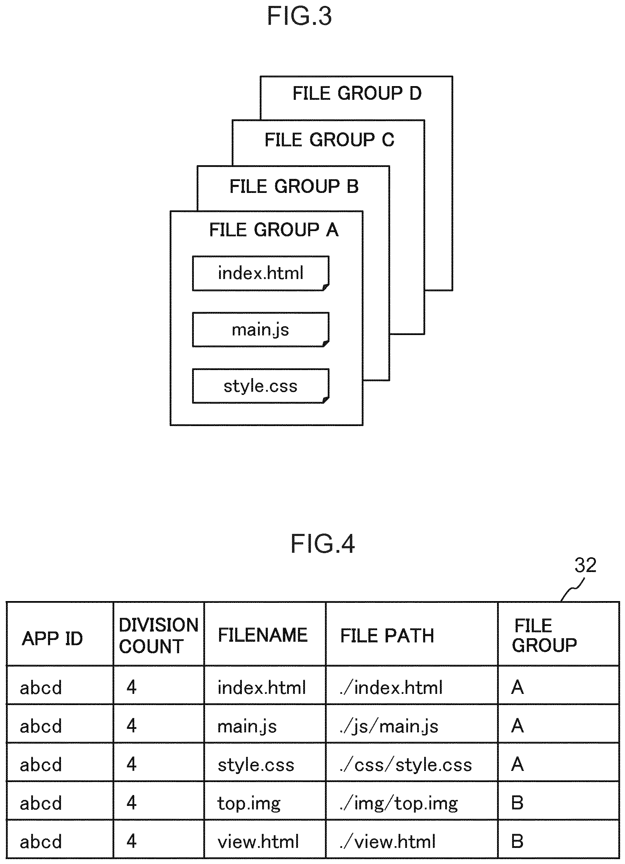

Further, based on the structure of each file and the structure of links between the files, the registration section 21 divides the plural files included in the received application into a specific division count (described in detail later) of file groups as conceptually illustrated in Fig. 3. In the example of Fig. 3, the application is divided into four file groups: file groups A, B, C, and D. Of these, file group A includes the files "index.html", "main.js", and "style.css" in the illustrated example. Note that although in the example of Fig. 3, the specific division count is 4 in the illustrated example, plural types (for example, 1, 2, 3, and 4) may be pre-set as specific division counts. Accordingly, the application is divided into the set division count for each type, i.e. a case of division into a single file group (no dividing), a case of division into two file groups, and so on.

The registration section 21 registers, in the file group table 32, which of the divided file groups includes each file included in the application, as illustrated in Fig. 4 for example. The file group table 32 illustrated in Fig. 4 includes information for each file: "app ID", "division count", "filename", "file path", and "file group". "App ID" is an app ID of the application that includes the file corresponding to the respective row. "Division count" is the type of division count (for example, 1, 2, 3, or 4) for the application. "File path" is information indicating the position of the file identified by "filename" in the app holding section 31. "File group" is information indicating which file group includes the file identified by the filename in the "filename" column when the application indicated by the app ID in the "app ID" column has been divided into the division count of the "division count" column.

Further, the registration section 21 analyzes transition states of the file groups based on the structure of each file included in the received application and the structure of links between the files. The transition states represent a sequence in which the plural file groups are needed (employed) and expected times at which the plural file groups are expected to be needed, when the application is executed by the client terminal 40. For example, when, based on the file structure of each file, it has been determined that file group A includes a file that will be needed soon after the applications starts, analysis indicates transition to file group A after starting. Further, when there is a link from the files included in file group A to the files included in file group B, analysis indicates transition from file group A to file group B.

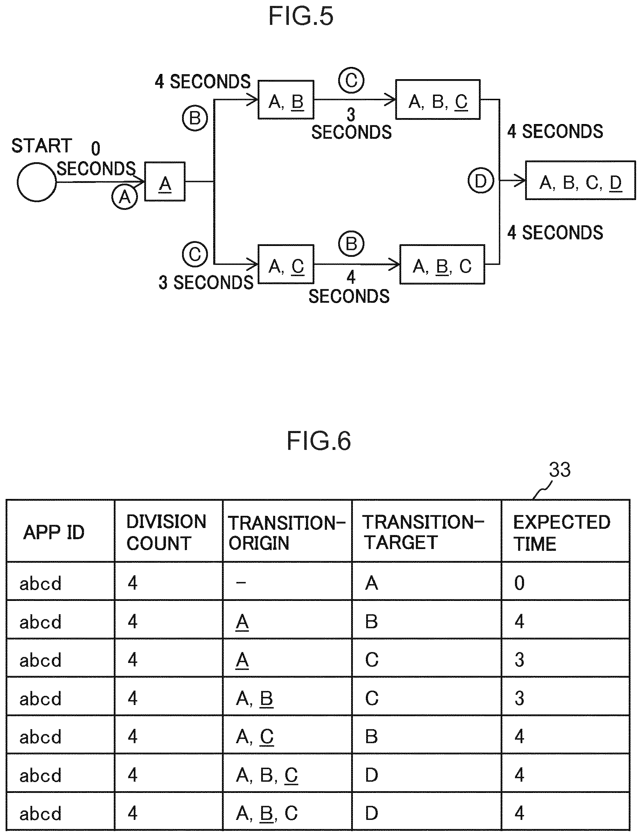

For example, suppose a transition graph like that illustrated in Fig. 5 is obtained from the result of analyzing the transition states of the file groups. Note that in Fig. 5, file groups that will be needed are displayed inside circles and file groups that have been transitioned to are displayed inside squares. Further, out of the file groups listed in the squares, the file group that is underlined indicates a file group that was last transitioned to. Note that the number of seconds noted at the arrows in Fig. 5 represents the time until transitioning from a transition-origin file group to a transition-target file group, namely, the time until the next file group will be needed. When the application is first registered, for example, values that depend on the content, data volume, and the like of each file; random values; or predetermined fixed values are allocated as the expected times.

The registration section 21 registers, in the file group transition table 33 like that illustrated in Fig. 6, for example, the analysis result of the transition states represented by the transition graph illustrated in Fig. 5, for example. Each row of the file group transition table 33 illustrated in Fig. 6 indicates a single transition state. Here, a pattern of transitioning from a given transition-origin file group to another transition-target file group is a single transition state. Each transition state includes the following information: "app ID", "division count", "transition-origin", "transition-target", and "expected time". The "transition-origin" is information regarding the transition-origin file group obtained from the analyzed transition states, and similarly, the "transition-target" is information regarding the transition-target file group. The "expected time" is the time until transitioning from the file group of the "transition-origin" column to the file group of the "transition-target" column.

Note that in the example of Fig. 6, all file groups that have been transitioned to up to that point are registered in the "transition-origin" column, and the file group that was transitioned to last is underlined. Further, since no transition-origin exists for the file group that will be needed soon after execution of the application, the "transition-origin" column is blank for this file group (indicated by "-" in Fig. 6).

The request reception section 22 receives delivery start requests, file requests, and delivery termination requests transmitted from the client terminal 40. The delivery start request is a request to start delivery of the application and includes identification information of the client terminal 40 (a client ID) and the app ID of the application for which the client terminal 40 is requesting to start delivery of. The request reception section 22 passes the received delivery start request to the division count determination section 24. The file request is a request for delivery of a file that the client terminal 40 does not hold, and includes the client ID, the app ID, and the filename of the needed file. The request reception section 22 passes the received file request to the delivery section 26. The delivery termination request is a request to terminate delivery of the application. The delivery termination request includes the client ID and the app ID, and may also include an access log (described in detail later). The request reception section 22 passes the received delivery termination request to the management section 25.

The division count determination section 24 determines the division count for the application indicated by the app ID included in the delivery start request passed from the request reception section 22. Here, the greater the number of client terminals 40 simultaneously connected to the delivery device 20, the lower the communication rate when delivering a large volume of data at once. On the other hand, when there are few connected client terminals 40, the drop in communication rate is small even if a large volume of data is delivered at once. Thus, in the present exemplary embodiment, the division count of the application is determined in accordance with the number of client terminals connected to the delivery device 20.

More specifically, the division count determination section 24 acquires the number of client terminals connected to the delivery device 20. Here, the number of client terminals connected to the delivery device 20 may be the number of client terminals 40 that have established a connection to the delivery device 20, or may be the number of client terminals 40 that files from the delivery device 20 are being delivered to. In the present exemplary embodiment, explanation follows regarding the former case. The division count determination section 24 reports, to the management section 25, the client IDs and app IDs that are included in the delivery start request for managing the client terminals 40 connected to the delivery device 20 in the management information table 35. Accordingly, as described later, the management section 25 increases the number of client terminals connected to the delivery device 20 by one in the management information table 35. The division count determination section 24 references the management information table 35 and counts the number of client terminals connected to the delivery device 20.

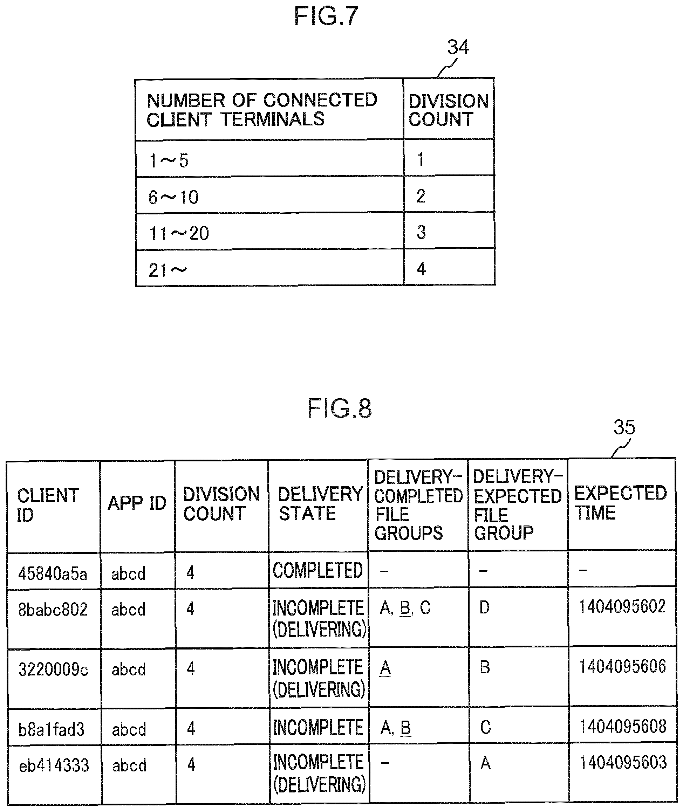

Further, the division count determination section 24 determines the division count for the application based on a predetermined relationship in which the greater the number of connected clients, the greater the division count for the application. For example, as illustrated in Fig. 7, the division count determination section 24 determines the division count corresponding to the counted number of connected client terminals from the division count table 34, which defines the correspondence relationship between the number of connected client terminals and the division count. The division count determination section 24 reports the determined division count to the management section 25, together with the client ID and app ID included in the delivery start request.

The management section 25 uses the management information table 35, like that illustrated in Fig. 8 for example, to manage the client terminals 40 connected to the delivery device 20, the delivery state of file groups that have actually been delivered to the client terminal 40, and the delivery schedule of the file groups. Each row of the management information table 35 illustrated in Fig. 8 corresponds to a single item of management information, and each item of management information includes the following information: a "client ID", an "app ID", a "division count", a "delivery state", "delivery-completed file groups", a "delivery-expected file group", and an "expected time".

More specifically, when the client ID and the app ID have been reported to the management section 25 by the division count determination section 24, the management section 25 records the reported client ID and app ID in the "client ID" column and the "app ID" column of the management information table 35. Further, the management section 25 records "incomplete" in the "delivery state" column. Note that "incomplete" in the "delivery state" column indicates a state of connection to the delivery device 20 in which delivery of file groups to the given client terminal 40 has not completed. Accordingly, the number of client terminals connected to the delivery device 20 can be acquired by counting the items of management information having "incomplete" in the "delivery state" column (including cases of "incomplete (delivering)", described later) in the management information table 35.

Further, the management section 25 records the division count in the management information table 35 when the client ID, the app ID, and the division count have been reported to the management section 25 by the division count determination section 24. More specifically, the management section 25 records the reported division count in the "division count" column of the item of management information for which the "client ID" column and the "app ID" column in the management information table 35 matches the reported client ID and app ID.

Further, when the division count has been recorded in the management information table 35, the management section 25 references the file group transition table 33 and determines the file group to be delivered first for the application having the app ID reported from the division count determination section 24. More specifically, the management section 25 searches in the file group transition table 33 for a transition state having "app ID" and "division count" columns that match the reported app ID and division count and having a blank "transition-origin" column. The management section 25 then acquires information of the file group of the "transition-target" column in the found transition state as the file group to be delivered first, and also acquires information in the "expected time" column. In association with the reported client ID, app ID, and division count, the management section 25 records the acquired file group and expected time in the "delivery-expected file group" column and "expected time" column of the management information table 35.

Note that in the present exemplary embodiment, the expected time is set to "0" for the file group to be delivered first, so that immediate delivery will occur in response to the delivery start request. Further, the management section 25 adds the time acquired from the "expected time" column of the file group transition table 33 to the current time and records the result in the "expected time" column of the management information table 35. Further, in the example of Fig. 8, the expected time is expressed in units of milliseconds.

As the delivery state, the management section 25 receives, from the delivery section 26, reports of a client ID of a client terminal 40 that a file group has been delivered to, the app ID of the application subject to delivery, the division count, and the file group that was delivered. The management section 25 then searches for management information for which the "client ID" column and the "app ID" column of the management information table 35 match the reported client ID and app ID. The management section 25 then adds information regarding the reported file group to the "delivery-completed file groups" column of the found management information, and sets a flag indicating that the added file group was the last file group delivered. Note that in the example of Fig. 8, the file group on which the flag is set is indicated by an underline.

The management section 25 determines and records, in the management information table 35, the delivery schedule for the first file group and onward after delivery of the file group, based on the file group transition table 33 and usage states of file groups in the client terminal 40. In the present exemplary embodiment, delivery states of the file groups delivered to the client terminal 40 from the delivery device 20, namely, information of the "delivery-completed file groups" column, is employed as usage states of the file groups in the client terminal 40.

More specifically, the management section 25 performs the following processing using transition states in the file group transition table 33 that match the "app ID" and "division count" of items of the management information to which the information of delivered file groups is added. The management section 25 compares the "delivery-completed file groups" of the management information table 35 column against the "transition-origin" column of the file group transition table 33. The management section 25 then determines whether or not there is a transition state in which the "transition-origin" column of the file group transition table 33 matches the "delivery-completed file groups" column of the management information table 35. When there is such a transition state, the management section 25 acquires the information of the "transition-target" column and the "expected time" column of that transition state.

When there are no matching transition states, the management section 25 acquires the information of the "transition-target" column and "expected time" column of a transition state selected from the management information table 35 using a predetermined rule. The predetermined rule may be, for example, selection of the transition state that has the most file groups in the "transition-origin" column matching the file groups in the "delivery-completed file groups" column, or may be a random selection. Note that the features of packaged web applications make it preferable to select a transition state in which at least the last delivered file group is matching.

In the "delivery-expected file group" column of the management information table 35, the management section 25 then records information of the file group of the acquired "transition-target" column, and in the "expected time" column of the management information table 35, the management section 25 also records a time obtained by adding the time of the "expected time" column to the current time.

The management section 25 determines that the file group to be delivered next is the file group of the "delivery-expected file group" column of the management information having a time in the "expected time" column of the management information table 35 that is closest to the current time. The management section 25 then reports the information of the determined file group to the delivery section 26, together with the information of the "client ID" column, the "app ID" column, and the "division count" column of that item of management information.

After receiving a report of delivery start for a file group from the delivery section 26, the management section 25 records "incomplete (delivering)" in the "delivery state" column until a delivery complete report is received. This means that the current file group is being delivered to the target client terminal 40. Further, when a delivery complete report for the file group has been received from the delivery section 26, the management section 25 references the file group table 32 and the "delivery-completed file groups" column, and determines whether or not delivery of all file groups has completed for the application subject to delivery. The management section 25 records "complete" in the "delivery state" column in cases in which delivery of all of the file groups has completed, or records "incomplete" in the "delivery state" column in cases in which there are file groups for which delivery has not yet completed.

Further, when the management section 25 has been passed a delivery termination request from the request reception section 22, the management section 25 searches for an item of management information for which the "client ID" column and "app ID" column of the management information table 35 match the client ID and app ID included in the delivery termination request. The management section 25 records "complete" in the "delivery state" column of the found management information. The number of client terminals connected to the delivery device 20 is accordingly reduced by one in the management information table 35. Further, the management section 25 registers access logs in the access log table 36 in cases in which access logs are included in the delivery termination request.

Note that the corresponding management information may be erased from the management information table 35 instead of recording "complete" in the "delivery state" column.

The delivery section 26 receives the file group, the division count, the client ID, and the app ID reported from the management section 25. The delivery section 26 then searches for rows in the file group table 32 having an "app ID" column, a "division count" column, and a "file group" that match the reported division count, app ID, and file group. The delivery section 26 acquires the filename of the "filename" column and the file path of the "file path" column for all of the found rows, and acquires all of the files included in the corresponding file group from the app holding section 31. The delivery section 26 delivers the acquired file group to the client terminal 40 indicated by the reported client ID.

When doing so, the delivery section 26 counts the number of client terminals to which file groups are being delivered by counting the items of management information of the management information table 35 having "incomplete (delivering)" in the "delivery state" column. In cases in which the number of client terminals to which file groups are being delivered is a predetermined number or greater, the delivery section 26 briefly waits and then delivers the file group at a timing at which the number of client terminals to which file groups are being delivered falls below the predetermined number. Strain on communication bandwidth can thereby be reduced by placing a restriction on the number of clients that file groups can be delivered to simultaneously.

Further, in cases in which a file request has been passed from the request reception section 22, the delivery section 26 references the management information table 35 and acquires the division count of the application that includes the files being requested. More specifically, the delivery section 26 acquires the corresponding division count from the "division count" column of the management information for which the "client ID" column and the "app ID" column of the management information table 35 match the client ID and app ID included in the file request. The delivery section 26 searches for rows having an "app ID" column, "filename" column, and "division count" column of the file group table 32 that match the app ID and filename included in the file request, and the acquired division count. The delivery section 26 acquires the file group of the "file group" column of the found row from the app holding section 31, and delivers the acquired file group to the client terminal 40 indicated by the client ID included in the file request.

Further, the delivery section 26 reports the delivery start to the management section 25 when delivery of the file group to the client terminal 40 starts. Further, when delivery has completed, the delivery section 26 reports the delivery completion to the management section 25, together with a delivery state that includes information of the client ID of the client terminal 40 to which the file group was delivered, the app ID of the application subject to delivery, the division count, and the delivered file group.

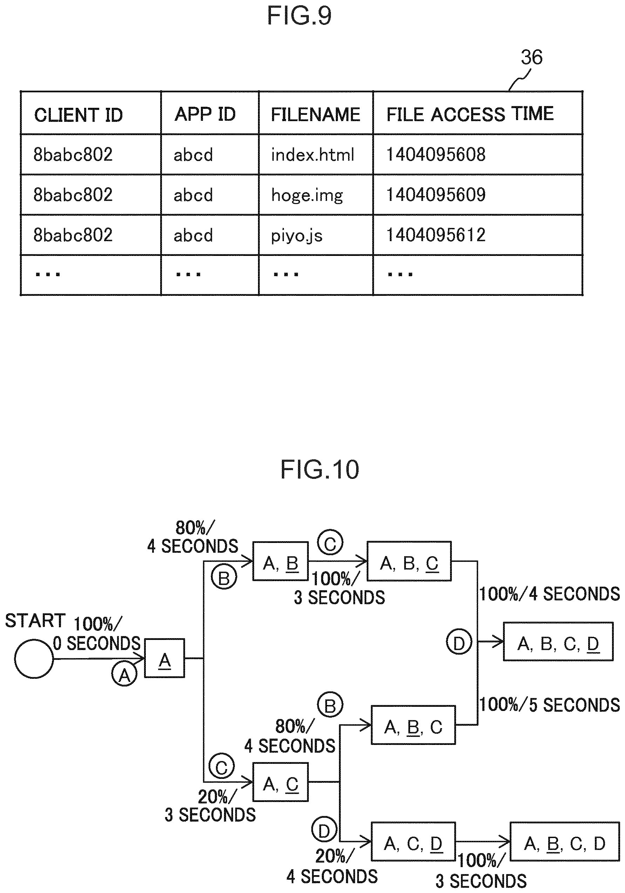

The update section 27 updates the application divisions and the file group transition table 33 based on access logs accumulated in the access log table 36. For example, as illustrated in Fig. 9, each row of the access log table 36 corresponds to a single access log, and the access logs each include the following information: "client ID", "app ID", "filename", and "file access time". "File access time" is the time at which the file holding section 52 of the client terminal 40 (described in detail later) was accessed in the client terminal 40 in order to acquire a file needed when executing an application. The time at which the file was actually needed can be recorded by recording the time at which the file holding section 52 was accessed as a log, irrespective of whether or not the needed file was successfully acquired from the file holding section 52.

The update section 27 arranges access logs accumulated in the access log table 36 for each client ID and each app ID into a time series using the file access times. The update section 27 then again divides the application into the specific division count similarly to in the registration section 21. Further, similarly to the registration section 21, the update section 27 reanalyzes the transition states of the file group based on the sequence in which files were accessed and the time intervals between accesses, and updates the file group transition table 33.

For example, suppose that a transition graph representing transition states of the file groups like that illustrated in Fig. 10 was obtained by the update section 27. In such a case, a transition state pattern of access to the file group D in a state in which the file group A and C are held, and a transition state pattern of access to the file group B in a state in which the file groups A, C, and D are held, have been added to the transition graph illustrated in Fig. 5. An access log is also included in the access log table 36 indicating that a file was accessed in a situation in which the file needed by the file holding section 52 of the client terminal 40 was not held, namely, in a transition state not registered in the file group transition table 33. Accordingly, when the transition states are reanalyzed, differences arise compared with the transition states that were registered initially.

Note that in Fig. 10, the percentages appended to the arrows are transition probabilities, and the numbers of seconds are average transition times. For example, Fig. 10 indicates that the file group A is requested soon after starting the application, and then, there is an 80% probability that file group B will be requested after an average of 4 seconds, and a 20% probability that the file group C will be requested after an average of 3 seconds.

Dividing the files using the access logs and updating the file group transition table 33 increases the likelihood that files needed by the client terminal 40 can be preemptively read and delivered with better precision.

Next, explanation follows regarding each functional section of the client terminal 40.

The request section 41 transmits a delivery start request for an application to the delivery device 20 in response to user input or a request from another application. Further, the request section 41 transmits a request from the execution section 42, described later, for delivery of a file, to the delivery device 20 as a file request. Further, when termination of an application has been requested by user input or from the execution section 42, described later, the request section 41 transmits a delivery termination request for the application to the delivery device 20, together with the access logs 51.

The execution section 42 executes the application, and in cases in which files are read in the application, accesses the file holding section 52 to acquire the files. In cases in which a needed file is not held in the file holding section 52, the request section 41 requests the needed file. Further, the execution section 42 records an access log 51 indicating that the file holding section 52 was accessed.

The acquisition section 43 acquires the file group delivered from the delivery device 20 and stores the acquired file group in the file holding section 52.

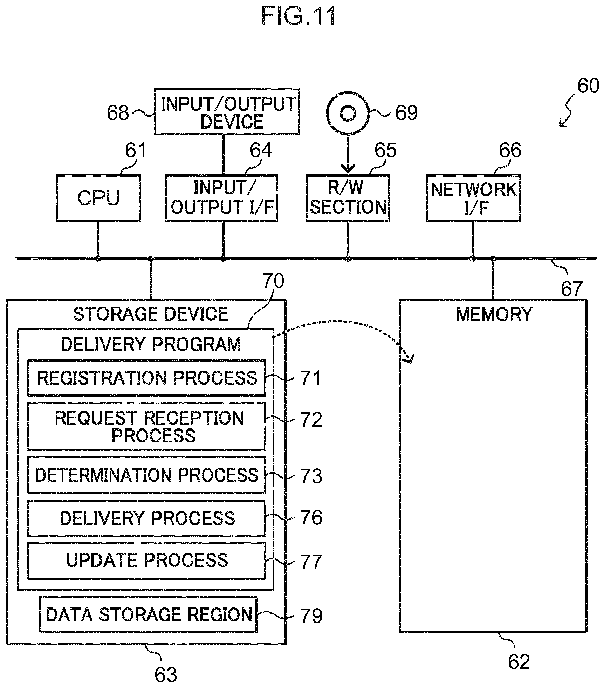

The delivery device 20 may, for example, be implemented by the computer 60 illustrated in Fig. 11. The computer 60 includes a CPU 61, memory 62 serving as a temporary storage region, and a non-volatile storage device 63. The computer 60 further includes an input/output interface (I/F) 64 to which input/output devices 68, such as a display device and an input device, are connected. Further, the computer 60 includes a read/write (R/W) section 65 that controls reading and writing of data to and from a recording medium 69, and a network I/F 66 connected to a network 15 such as the internet. The CPU 61, the memory 62, the storage device 63, the input/output I/F 64, the R/W section 65, and the network I/F 66 are connected to one another by a bus 67.

The storage device 63 may, for example, be implemented by a hard disk drive (HDD), a solid state drive (SSD), or flash memory. A delivery program 70 for causing the computer 60 to function as the delivery device 20 is stored in the storage device 63, which serves as a recording medium. Further, the storage device 63 includes a data storage region 79 that stores data for constructing various tables. The CPU 61 reads the delivery program 70 from the storage device 63, expands the delivery program 70 into the memory 62, and sequentially executes processes included in the delivery program 70. Further, the CPU 61 reads the data from the data storage region 79, and expands the data into the memory 62 as the various tables.

The delivery program 70 includes a registration process 71, a request reception process 72, a determination process 73, a delivery process 76, and an update process 77. The CPU 61 operates as the registration section 21 illustrated in Fig. 2 by executing the registration process 71. The CPU 61 also operates as the request reception section 22 illustrated in Fig. 2 by executing the request reception process 72. The CPU 61 also operates as the determination section 23 illustrated in Fig. 2 by executing the determination process 73. The CPU 61 also operates as the delivery section 26 illustrated in Fig. 2 by executing the delivery process 76. The CPU 61 also operates as the update section 27 illustrated in Fig. 2 by executing the update process 77. The computer 60 executing the delivery program 70 thereby functions as the delivery device 20.

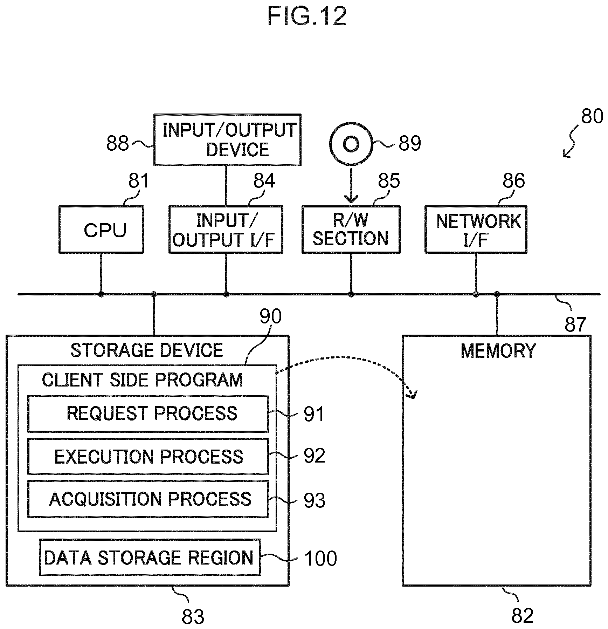

The client terminal 40 may, for example, be implemented by the computer 80 illustrated in Fig. 12. The computer 80 includes a CPU 81, memory 82, a storage device 83, an input/output I/F 84 connected to an input/output device 88, an R/W section 85 that controls reading and writing of data to and from a recording medium 89, and a network I/F 86. The CPU 81, the memory 82, the storage device 83, the input/output I/F 84, the R/W section 85, and the network I/F 86 are connected to one another by a bus 87.

A client-side program 90 for causing the computer 80 to function as the client terminal 40 is stored in the storage device 83, which serves as a recording medium. The storage device 83 also includes a data storage region 100 that stores various data. The CPU 81 reads the client side program 90 from the storage device 83, expands the client side program 90 into the memory 82, and sequentially executes processes included in the client side program 90.

The client side program 90 includes a request process 91, an execution process 92, and an acquisition process 93. The CPU 81 operates as the request section 41 illustrated in Fig. 2 by executing the request process 91. The CPU 81 also operates as the execution section 42 illustrated in Fig. 2 by executing the execution process 92. The CPU 81 also operates as the acquisition section 43 illustrated in Fig. 2 by executing the acquisition process 93. The computer 80 executing the client side program 90 thereby functions as the client terminal 40.

Note that the delivery device 20 and the client terminal 40 may each be implemented by, for example, a semiconductor integrated circuit, and more specifically, by an application specific integrated circuit (ASIC).

Next, explanation follows regarding operation of the delivery system 10 according to the present exemplary embodiment.

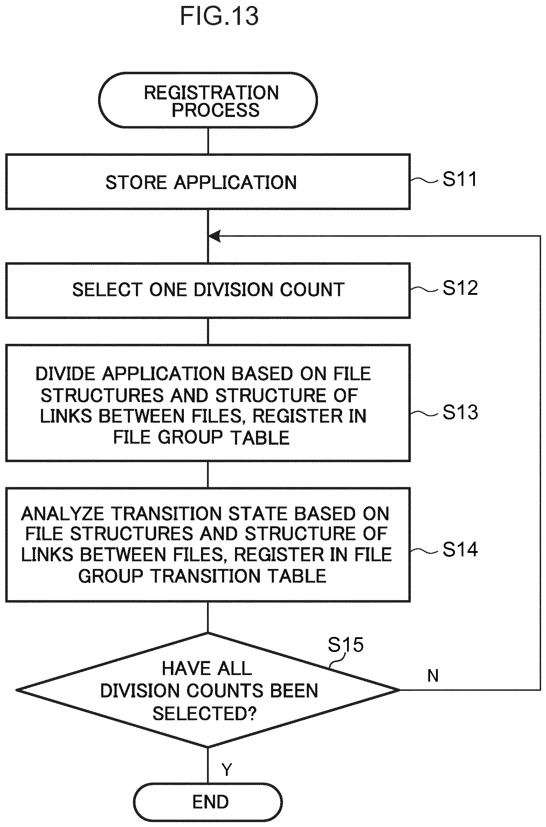

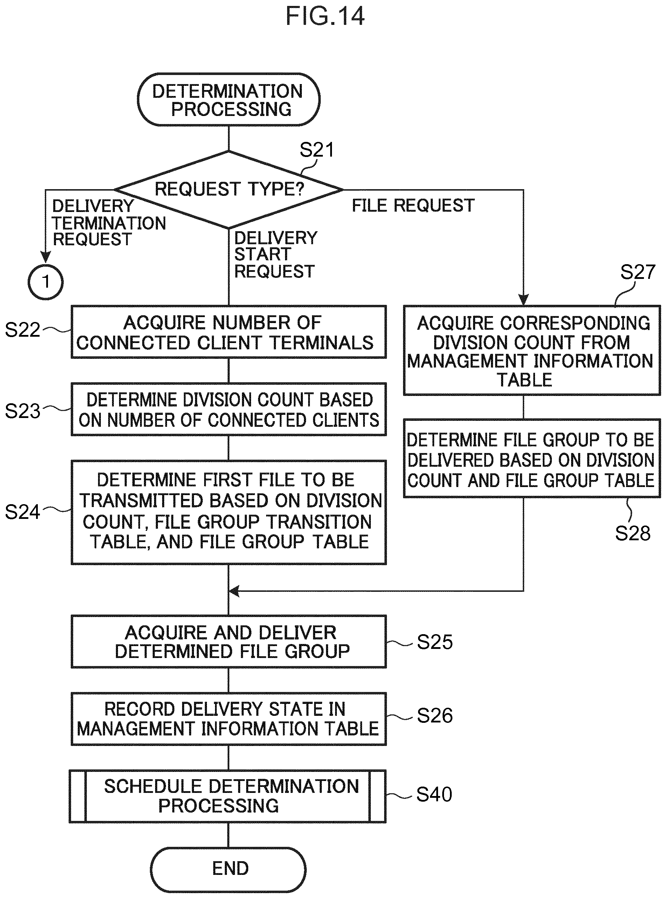

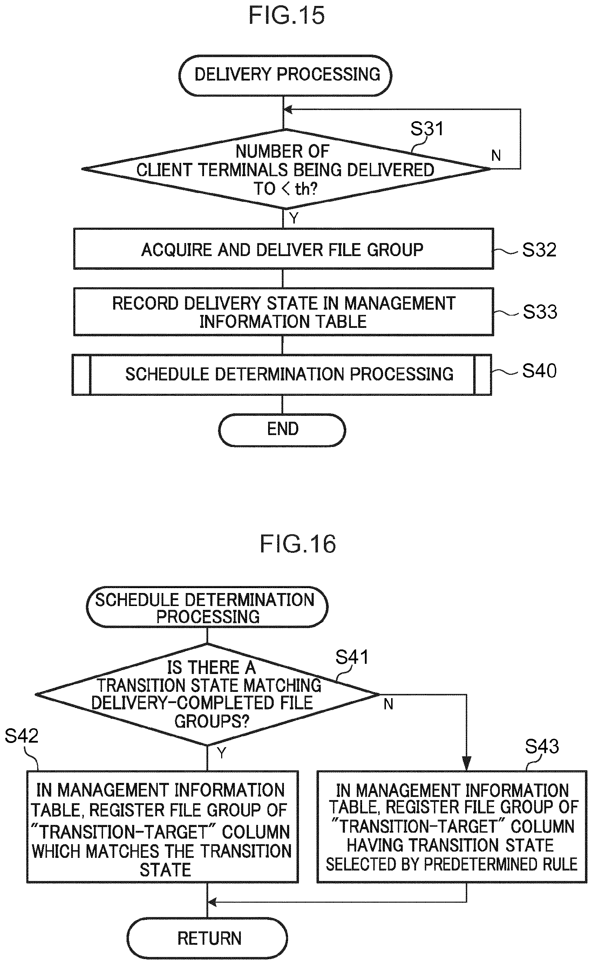

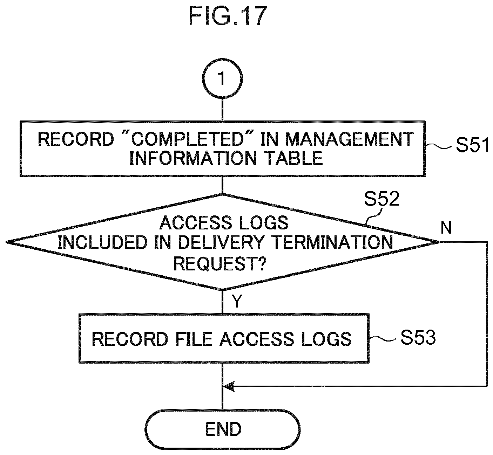

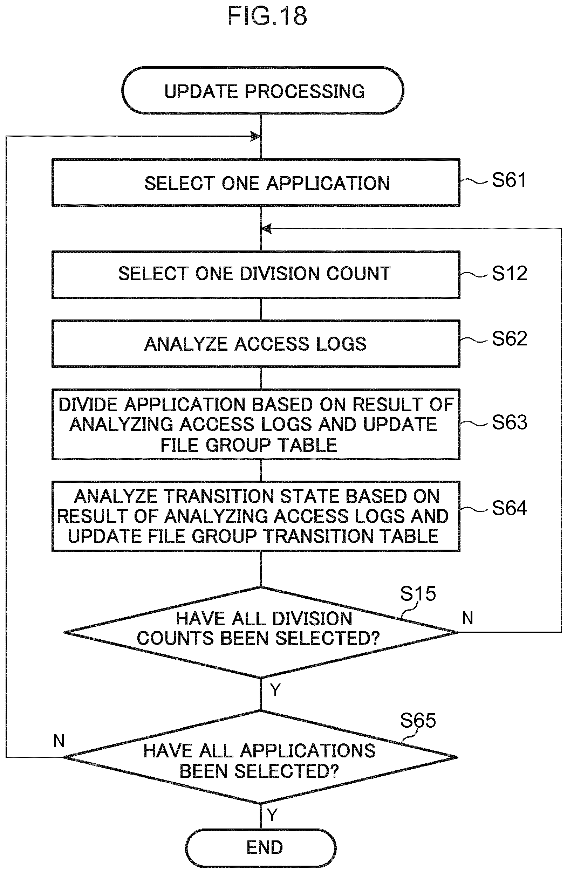

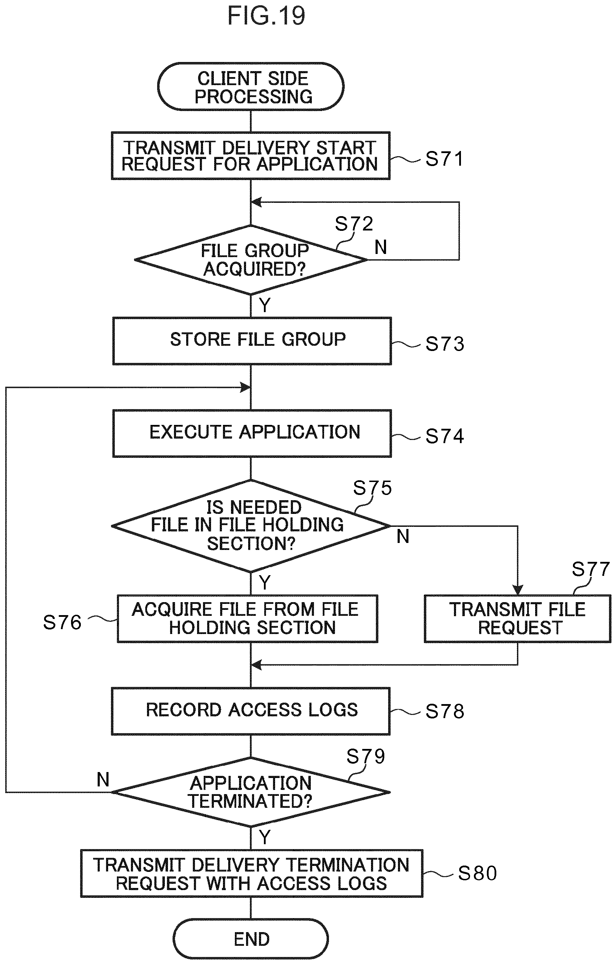

When an application to be newly registered to the delivery device 20 has been input, the registration processing illustrated in Fig. 13 is executed in the delivery device 20. Further, when the delivery device 20 receives a request transmitted from the client terminal 40, the determination processing illustrated in Fig. 14 and Fig. 17 and the delivery processing illustrated in Fig. 15 are executed by the delivery device 20. Further, the update processing illustrated in Fig. 18 is, for example, executed in the delivery device at arbitrary timings, such as once per day or once per month. On the other hand, the client side processing illustrated in Fig. 19 is executed in the client terminal 40. Details regarding each processing follows.

First, explanation follows regarding the registration processing illustrated in Fig. 13.

At step S11, the registration section 21 stores the input application in the app holding section 31. Next, at step S12, the registration section 21 selects one type from the preset types of division counts for the application (for example, 1, 2, 3, 4).

Next, at step S13, the registration section 21 divides plural files included in the received application into the selected division count based on the structure of each file and the structure of links between the files. The registration section 21 then registers, in the file group table 32 like that illustrated in Fig. 4, for example, which of the divided file groups contains each file included in the application.

Next, at step S14, the registration section 21 analyzes the transition states of the file groups based on the structure of each file included in the received application and the structure of the links between the files. The registration section 21 then registers the analyzed transition states in the file group transition table 33 like that illustrated in Fig. 6, for example.

Next, at step S15, the registration section 21 determines whether or not all of the preset division counts have been selected. In cases in which there are division counts that have not yet been selected, processing returns to step S12, the next division count is selected, and the processing of steps S13 to S15 is repeated. In cases in which all of the division counts have been selected, registration processing ends.

Next, explanation follows regarding the determination processing illustrated in Fig. 14.

At step S21, the request reception section 22 determines the kind of request received from the client terminal 40. In cases in which the request received from the client terminal 40 is a delivery start request, the request reception section 22 passes the received delivery start request to the division count determination section 24 and processing transitions to step S22. In the case of a file request, the request reception section 22 passes the received file request to the delivery section 26 and processing transitions to step S27. In the case of a delivery termination request, the request reception section 22 passes the received delivery termination request to the management section 25 and processing transitions to step S51 of Fig. 17.

At step S22, the division count determination section 24 reports the client ID and the app ID included in the delivery start request to the management section 25. The management section 25 then increases the number of client terminals connected to the delivery device 20 by one in the management information table 35, based on the reported information. The division count determination section 24 references the management information table 35 and acquires the number of client terminals connected to the delivery device 20.

Next, at step S23, the division count determination section 24 determines the division count for the application based on the acquired number of connected client terminals and the division count table 34. For example, in cases in which the acquired number of connected client terminals is "25" and the division count table 34 illustrated in Fig. 7 is employed, the division count determination section 24 determines that the division count is "4". The division count determination section 24 reports the determined division count to the management section 25. The management section 25 then records the division count in the management information table 35.

Next, at step S24, the management section 25 references the file group transition table 33, acquires information regarding the file group to be first delivered in response to a delivery request for the application, and records the acquired information in the management information table 35. Since the file group to be first delivered is immediately delivered in the present exemplary embodiment, the management section 25 immediately determines that the recorded file group is the file group to be delivered next, and reports the recorded file group to the delivery section 26 together with the client ID, the app ID, and the division count.

Next, at step S25, the delivery section 26 searches for the filename and file path of the files included in the determined file group from the file group table 32, and acquires the corresponding file group from the app holding section 31. The delivery section 26 reports the start of delivery to the management section 25 and delivers the acquired file group to the client terminal 40 indicated by the reported client ID. Then, when delivery completes, the delivery section 26 reports the completion of delivery to the management section 25 together with the delivery state. The management section 25 records the "delivery state" column of the management information table 35 based on the reports of delivery start and delivery completion.

Next, at step S26, the management section 25 records the delivery state reported from the delivery section 26 in the management information table 35. Next, at step S40, schedule determination processing, described later, is executed and the determination processing ends.

On the other hand, in cases in which the request received from the client terminal 40 is a file request and the processing has transitioned to step S27, the delivery section 26 references the management information table 35 and acquires the division count for the application that includes the requested files.

Next, at step S28, the delivery section 26 determines the file group that includes the file being requested as the file group to be delivered based on the acquired division count and the file group table 32, and processing transitions to step S25.

Next, explanation follows regarding the delivery processing illustrated in Fig. 15. The delivery processing starts when the file group, the division count, the client ID, and the app ID are reported to the delivery section 26 from the management section 25.

At step S31, the delivery section 26 references the "delivery state" column of the management information table 35 and counts the number of client terminals to which file groups are being delivered. The delivery section 26 then determines whether or not the number of client terminals being delivered to is less than a predetermined number th. Processing transitions to step S32 in cases in which the number of client terminals being delivered to is less than the predetermined number th, or the determination of the current step is repeated in cases in which the number of client terminals being delivered to is the predetermined number th or greater.

At step S32, the delivery section 26 identifies, from the file group table 32, the file group reported from the management section 25, acquires the identified file group from the app holding section 31, and delivers the acquired file group to the client terminal 40. The delivery section 26 then reports the delivery state to the management section 25.

Next, at step S33, the management section 25 records the delivery state reported from the delivery section 26 in the management information table 35. Next, at step S40, schedule determination processing, described later, is executed and the delivery processing ends.

Next, explanation follows regarding the determination processing (Fig. 14) and the schedule determination processing executed at step S40 of the delivery processing (Fig. 15), with reference to Fig. 16.

At step S41, the management section 25 determines whether or not, in the file group transition table 33, there is a transition state for which the file groups registered in the "transition-origin" column match the file groups of the "delivery-completed file groups" of the management information table 35. Processing transitions to step S42 in cases in which there is such a transition state, or processing transitions to step S43 in cases in which there is no such transition state.

At step S42, the management section 25 acquires the information in the "transition-target" column and the "expected time" column of the transition state having file groups in the "transition-target" column that match the "delivery-completed file groups". The management section 25 then records the acquired information in the management information table 35 and returns to the determination processing or the delivery processing.

On the other hand, at step S43, the management section 25 acquires the information of the "transition-target" column and the "expected time" column of the transition state selected from the file group transition table 33 using the predetermined rule. The management section 25 then records the acquired information in the management information table 35 and returns to the determination processing or the delivery processing.

Next, explanation follows regarding processing in cases in which the request received from the client terminal 40 was a delivery termination request at step S21 of the determination processing above, with reference to Fig. 17.

At step S51, the management section 25 searches for management information for which the "client ID" column and the "app ID" column of the management information table 35 match the client ID and the app ID included in the delivery termination request passed from the request reception section 22. The management section 25 records "completed" in the "delivery state" column of the found management information.

Next, at step S52, the management section 25 determines whether or not access logs are included in the delivery termination request. In cases in which access logs are included, processing transitions to step S53, the management section 25 registers the access logs in the access log table 36, and the determination processing ends. In cases in which no access logs are included, the determination processing ends as-is.

Next, explanation follows regarding the update processing illustrated in Fig. 18. Note that the same reference numerals are allocated to processing that is the same as that of the registration processing (Fig. 13), and detailed explanation thereof is omitted.

At step S61, the update section 27 selects one application from the applications registered in the app holding section 31. Next, at step S12, the update section 27 selects one division count.

Next, at step S62, the update section 27 arranges the access logs accumulated in the access log table 36 into a time series or the like using the file access times for each client ID and each app ID, and analyzes the access logs. Next, at step S63, the update section 27 re-divides the application into the specific division count based on the result of analyzing the access logs, and updates the file group table 32.

Next, at step S64, the update section 27 analyzes, from the result of analyzing the access logs, the transition state of the file group based on the sequence in which the files were accessed and the time intervals between accesses, and updates the file group transition table 33.

Next, at step S 15, the update section 27 determines whether or not all of the division counts have been selected, and processing returns to step S12 in cases in which there are division counts that have not yet been selected. Processing transitions to step S65 in cases in which all of the division counts have been selected.

At step S65, the update section 27 determines whether or not all of the applications registered in the app holding section 31 have been selected. In cases in which there are applications that have not yet been selected, processing returns to step S61, the next application is selected, and the processing of steps S61 to S65 is repeated. The update processing ends in cases in which all of the applications have been selected.

Next, explanation follows the regarding client side processing illustrated in Fig. 19.

At step S71, the request section 41 transmits, to the delivery device 20, a delivery start request that includes the client ID of the terminal itself and the app ID of the application for which delivery start is requested.

Next, at step S72, the acquisition section 43 determines whether or not the file group delivered from the delivery device 20 has been acquired. In cases in which the file group has not been acquired, the acquisition section 43 waits until the file group is acquired. In cases in which the file group has been acquired, processing transitions to step S73 and the acquisition section 43 stores the acquired file group in the file holding section 52.

Next, at step S74, the execution section 42 executes the application while accessing files held by the file holding section 52. Next, at step S75, the execution section 42 determines whether or not a file needed for execution of the application is held in the file holding section 52. In cases in which the file is not held, processing transitions to step S76, the execution section 42 acquires the needed file from the file holding section 52 and processing transitions to step S78. On the other hand, in cases in which the needed file is not held in the file holding section 52, the execution section 42 requests the needed file from the request section 41. The request section 41 then transmits, to the delivery device 20, a file request that includes the client ID, the app ID, and the filename of the needed file; and processing transitions to step S78.

At step S78, the execution section 42 records the access logs 51, which include the file access time of when the file holding section 52 was accessed and the filename of the needed file.

Next, at step S79, the execution section 42 determines whether or not execution of the application has terminated. Processing transitions to step S80 in cases in which execution has terminated, or processing returns to step S74 in cases in which execution has not terminated.

At step S80, the request section 41 transmits, to the delivery device 20, a delivery termination request that includes the client ID, the app ID, and the access logs; and the client side processing ends.

As explained above, according to the delivery device according to the present exemplary embodiment, the application is divided into plural file groups and delivered. When doing so, a delivery schedule for the file groups is dynamically determined based on the transition states of the file groups of plural predetermined patterns and the usage states of the files in the client terminal. Accordingly, files that will be needed by the client terminal to execute the application can be preemptively read and delivered appropriately, and waiting time in the client terminal can be reduced when the application is divided and delivered.

Further, in cases in which a file needed by the client terminal is not included in the file groups delivered based on the determined delivery schedule, a file group that includes the needed file is immediately delivered in accordance with a request by the client terminal. Thus, even in such cases, the file group to be delivered next is determined using information regarding file groups delivered to the client terminal, namely, file groups acquired by the client terminal. This enables preemptive reading and delivery to be performed thereafter without being influenced by a single deviating preemptive read and delivery.

Further, a delivery schedule having high preemptive reading precision can be determined by determining the delivery schedule using information regarding at least the last file group that was acquired by the client terminal. In particular, a characteristic of packaged web applications is that page transitions are made by user operation, and the next file group needed is changed by user operation. Further, transitions made by page units represent strong links between the file group that was last acquired and the file group that will be needed next. Accordingly, it is effective to predict the file group needed next from at least the file group that was acquired last by the client terminal, without determining the entire delivery schedule from the start.

Further, the division count for dividing the application into plural file groups is determined based on the number of client terminals connected to the delivery device. Accordingly, unnecessary dividing of the application can be avoided while reducing the strain on communication bandwidth to also appropriately correspond to changes in the number of connected client terminals. In particular, correlation between the volume of the application to be delivered and the communication bandwidth is high in an environment such as a local network in only a predetermined area or a dedicated network for each application server. For example, a case in which a test application is delivered all at once to client terminals held by pupils in a school. Accordingly, the volume of the application to be delivered can be adjusted and strain on communication bandwidth can be avoided by adjusting the division count of the application.

Further, the application is re-divided and the transition states reanalyzed using access logs in the client terminal. Thereafter, determination of a delivery schedule that reflects actual usage states of the files in the client terminal is therefore possible, and more appropriate preemptive reading and delivery is enabled.

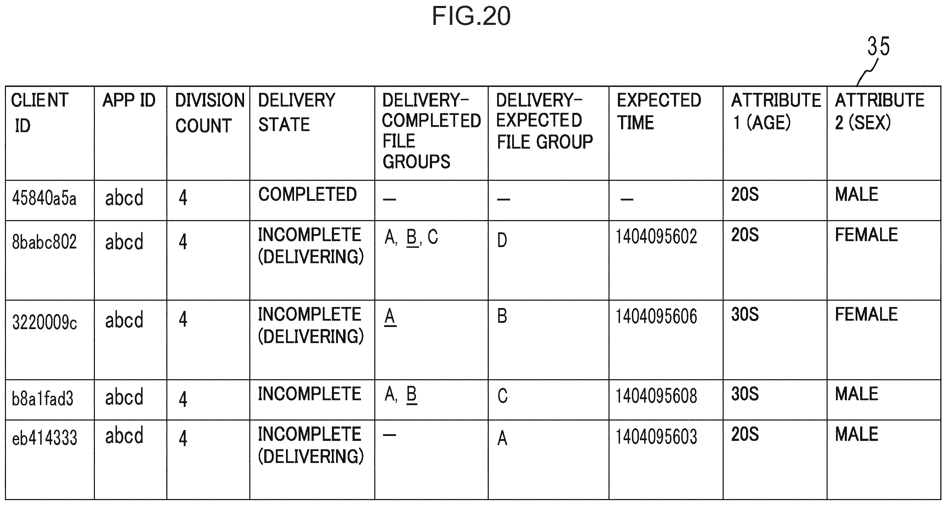

Note that technology disclosed herein is not limited to the mode of the exemplary embodiment described above. For example, the delivery schedule may be determined in consideration of attributes of the user using the client terminal. In such cases, attribute information of the user is also transmitted, for example, when transmitting the delivery start request of the application from the client terminal to the delivery device. Then, a file group table and a file transition table are prepared for each attribute of the user in the delivery device. Further, as illustrated in Fig. 20, the attributes of the user are also managed as items of management information in a management information table. The file group table and the file transition table are then selected in accordance with the attributes of the user recorded in the management information table, and the delivery schedule is determined. This enables the delivery schedule of the file groups to be more appropriately determined for the application using differences in the attributes of the users, such as different page transitions. Further, in such cases, in cases in which there exists no transition state having a "transition-origin" matching the delivery-completed file groups in a file group transition table that corresponds to the attributes of the user, a corresponding transition state may be selected from a file group transition table for similar attributes.

Further, in the exemplary embodiment described above, explanation has been given regarding a case in which the delivery state of the file groups delivered from the delivery device to the client terminal are employed as the usage states of the file groups in the client terminal. However, there is no limitation thereto. Each time a file is accessed from the client-side terminal, for example, the access time and the file accessed, or the file group including that file may be reported to the delivery device, and the usage state of the file group in the client terminal may be acquired directly.

Further, in the exemplary embodiment above, explanation has been given regarding a case in which access logs acquired from the client terminal are employed to re-divide the application and re-analyze the transition states. However, there is no limitation thereto. The delivery states recorded in the management information table may be employed. In such cases, information regarding times at which each delivered file group was delivered may be recorded when delivery is completed in addition to information regarding the delivery-completed file groups.

Further, in the exemplary embodiment above, explanation has been given regarding a case in which a management information table like that illustrated in Fig. 8 or Fig. 20 is managed at the delivery device side. However, the management information table may be managed at the client terminals side. In such cases, information regarding the division count determined in the delivery device, and some information of the file group transition table corresponding to the application requested by the client terminal and the determined division count, are transmitted to the client side. Then, in the client terminal, a request schedule for the file groups may be determined using a method similar to the delivery schedule determination above, and the file groups may be requested from the delivery device according to the determined schedule.

Although explanation has been given above of a mode in which the delivery program 70 is pre-stored (installed) on the storage device 63 and the client side program 90 is pre-stored on the storage device 83, there is no limitation thereto. Programs may be provided in a mode recorded to a recording medium such as a CD-ROM, DVD-ROM, or USB memory.

## Claims

1. A delivery method that causes a computer to execute processing, the processing comprising:
when delivering, to a terminal, a plurality of file groups comprising an application divided into a specific division count, selecting a file group that is to be delivered next based on a usage state of a file group at the terminal and a file group transition state that was predetermined based on a usage sequence of each of the plurality of file groups when executing the application; and
delivering the selected file group to the terminal.

2. The delivery method of claim 1, wherein selecting the file group to be delivered next includes determining the specific division count in accordance with a number of terminals that are connected in order to request delivery of the application.

3. The delivery method of claim 1 or claim 2, the processing further comprising determining a sequence in which each of the plurality of file groups will be needed when executing the application, and a plurality of patterns of expected times at which the respective file groups will be needed, as the file group transition state.

4. The delivery method of any one of claim 1 to claim 3, wherein the usage state of a file group at the terminal is a delivery state of file groups delivered to the terminal.

5. The delivery method of claim 4, wherein the delivery state of file groups delivered to the terminal includes a delivery state of a file group that was most recently delivered.

6. The delivery method of any one of claim 1 to claim 5, the processing further comprising managing management information for use in determining the file group to be delivered next, the management information including:
delivery states of file groups delivered to the terminal;
the file group selected to be delivered next based on the file group transition state; and
an expected time at which the file group selected to be delivered next will be needed.

7. The delivery method of claim 6, wherein, when delivering the selected file group, the file group is delivered in order of how close the expected time is to the current time, based on the management information.

8. The delivery method of any one of claim 1 to claim 7, the processing further comprising, in cases in which delivery of a file group has been requested from the terminal, in addition to delivery of the selected file group, delivering the requested file group at a requested timing.

9. The delivery method of any one of claim 1 to claim 8, wherein, when the selected file group is to be delivered, the file group is delivered in cases in which a number of other terminals to which file groups are being delivered is a predetermined number or less.

10. The delivery method of any one of claim 1 to claim 9, the processing further comprising updating the division count of the application and the file group transition state, based on a delivery state of file groups delivered to the terminal or the usage state of a file group at the terminal.

11. The delivery method of any one of claim 1 to claim 10, wherein, when selecting the file group to be delivered next, the file group to be delivered next is selected based on an attribute of a user of the terminal and based on a file group transition state of the file group that corresponds to the user attribute.

12. A delivery device, comprising:
a determination section that, when delivering, to a terminal, a plurality of file groups comprising an application divided into a specific division count, selects a file group that is to be delivered next based on a usage state of a file group at the terminal and a file group transition state that was predetermined based on a usage sequence of each of the plurality of file groups when executing the application; and
a delivery section that delivers the file group selected by the determination section to the terminal.

13. The delivery device of claim 12, wherein the determination section determines the specific division count in accordance with a number of terminals that are connected in order to request delivery of the application.

14. The delivery device of claim 12 or claim 13, wherein a sequence in which each of the plurality of file groups will be needed when executing the application, and a plurality of patterns of expected times at which the respective files groups will be needed, are determined as the file group transition state.

15. The delivery device of any one of claim 12 to claim 14, wherein the usage state of a file group at the terminal is a delivery state of file groups delivered to the terminal.

16. The delivery device of claim 15, wherein the delivery state of file groups delivered to the terminal includes a delivery state of a file group that was most recently delivered.

17. The delivery device of any one of claim 12 to claim 16, wherein the determination determines manages management information including:
delivery states of file groups delivered to the terminal;
the file group selected to be delivered next based on the file group transition state; and
an expected time at which the file group selected to be delivered next will be needed.

18. The delivery device of claim 17, wherein the delivery section delivers the file groups in order of how close the expected time is to the current time, based on the management information.

19. The delivery device of any one of claim 12 to claim 18, wherein, in cases in which delivery of a file group has been requested from the terminal, the delivery section delivers the requested file group at a requested timing.

20. The delivery device of any one of claim 12 to claim 19, wherein the delivery section delivers the file group selected by the determination section in cases in which a number of other terminals to which file groups are being delivered is a predetermined number or less.

21. The delivery device of any one of claim 12 to claim 20, further comprising an updating section that, based on a delivery state of file groups delivered to the terminal or the usage state of a file group at the terminal, updates the division count of the application and the file group transition state.

22. The delivery device of any one of claim 12 to claim 21, wherein the determination section determines the file group to be delivered next based on an attribute of a user of the terminal and based on a file group transition state that corresponds to the user attribute.

23. A delivery program that causes a computer to execute processing, the processing comprising:
when delivering, to a terminal, a plurality of file groups comprising an application divided into a specific division count, selecting a file group to be delivered next based on a usage state of a file group at the terminal and a file group transition state that was predetermined based on a usage sequence of each of the plurality of file groups when executing the application; and
delivering the selected file group to the terminal.

24. A recording medium stored with a delivery program that causes a computer to execute processing, the processing comprising:
when delivering, to a terminal, a plurality of file groups comprising an application divided into a specific division count, selecting a file group to be delivered next based on a usage state of a file group at the terminal and a file group transition state that was predetermined based on a usage sequence of each of the plurality of file groups when executing the application; and
delivering the selected file group to the terminal.
